Europäisches Patentamt

European Patent Office

Office européen des brevets

(11) Veröffentlichungsnummer: **0 342 184**
A2

# EUROPÄISCHE PATENTANMELDUNG

(21) Anmeldenummer: 89890139.2

(22) Anmeldetag: 09.05.89

(51) Int. Cl.⁴: **B 01 D 53/34**

(30) Priorität: 09.05.88 AT 1202/88

(43) Veröffentlichungstag der Anmeldung:
15.11.89 Patentblatt 89/46

(84) Benannte Vertragsstaaten:
BE CH DE ES FR GB GR IT LI LU NL SE

(71) Anmelder: WAAGNER-BIRO AKTIENGESELLSCHAFT
Stadlauer-Strasse 54 Postfach 11
A-1221 Wien (AT)

(72) Erfinder: Niedermayer, Erwin, Dipl.-Ing.
Wagramerstrasse 93/1/1
A-1220 Wien (AT)

Kucera, Heinz
Bahngasse 24
A-2294 Marchegg (AT)

Tauschitz, Josef, Dipl.-Ing.
Kohldorfer Strasse 98
A-9010 Klagenfurt (AT)

Zellinger, Günter, Dipl.-Ing.
Kohldorfer Strasse 98
A-9010 Klagenfurt (AT)

(74) Vertreter: Wallner, Gerhard, Dipl.-Ing.
c/o Waagner-Biro Aktiengesellschaft Patentabteilung
Stadlauer-Strasse 54 Postfach 11
A-1221 Wien (AT)

(54) Verfahren zur Entfernung von Stickoxiden mittels fester Reduktionsmittel.

(57) In einem Verfahren zur Abscheidung von $NO_x$ wird in die Brennkammer ein bei hohen Temperaturen zerfallendes festes Reduktionsmittel wie z.B. Harnstoff in gelöster Form aufgegeben, wobei als Zerstäubungsmedium ein gas- oder dampfförmiges Hilfsmittel Verwendung findet, in welchem das Reduktionsmittel bereits vor dem Eintritt in die Brennkammer eingesprüht und somit teilweise getrocknet wird, wodurch intermediäre Verbindungen, insbesondere mit den Zerfallsprodukten, entstehen. Durch dieses Verfahren lassen sich bei einer Stöchiometrie von 1 bis 1,5 die derzeit gesetzlich vorgeschriebenen Emissionsgrenzen einhalten, ohne daß zusätzliche Emissionen beispielsweise durch $NH_3$ auftreten.

EP 0 342 184 A2

# Beschreibung

## Verfahren zur Entfernung von Stickoxiden mittels fester Reduktionsmittel

Die Erfindung betrifft ein Verfahren zur Entfernung von Stickoxiden aus Abgasen mittels Harnstoff bzw. Harnstoffderivaten, vorrangig in Form wässriger Lösungen, der bzw. die in den Abgasstrom im Temperaturbereich von 700° C bis 1200° C eingedüst und über den gesamten Abgasquerschnitt verteilt wird bzw. werden.

Es ist bekannt, in die Brennkammer eines Dampferzeugers feste Sorptionsmittel einzublasen, und mit diesen Schadstoffe wie $SO_x$, Chlor, Fluor und auch Stickoxide teilweise abzubinden. Diese Verfahren haben den Nachteil, daß feste chemische Verbindungen entstehen bzw. bestehen bleiben, die den Aschengehalt des Abgases erhöhen und letzten Endes die Deponien beanspruchen. Ein weiterer Nachteil ist, daß es nach diesen bekannten Verfahren meistens nicht möglich ist, in einer Reinigungsstufe die gesetzlich vorgeschriebene Reinheit des Abgases zu erreichen, so daß weitere absorptive Reinigungsstufen notwendig sind, die sowohl den Platzbedarf erhöhen und daher für Altanlagen nicht geeignet sind, als auch die Betriebsergebnisse drastisch verschlechtern.

Es ist bekannt, in die heißen Abgase gasförmiges Ammoniak einzublasen, wodurch es zu einer Reduktion von Stickoxiden kommt, wobei aber der Nachteil auftritt, das insbesondere bei schwankendem Stickoxidgehalt Ammoniak durch den Kamin entweicht, so daß weitere Maßnahmen, insbesondere über Katalysatoren, notwendig erscheinen, die das Verfahren unnötig verteuern. Es ist ferner bekannt, Harnstoff bzw. Harnstofflösungen direkt in die Brennkammer einzublasen (US-PS 4,208,386 bzw. 4,325,924), wobei durch ein Zusatzadditiv das Temperaturgebiet erweitert wird, in welchem der Stickstoffabbau möglich ist. Dieses Verfahren ist sehr anfällig gegen Lastschwankungen und Temperaturänderungen, und da alle organischen Verbindungen bei 1000°C zersetzt werden, ist die Lebensdauer des Harnstoffs zeitlich begrenzt, so daß es infolge von kleinen Temperaturänderungen zu einem vollen Zusammenbruch der $NO_x$-Reduzierung kommt.

Es ist daher Sinn und Zweck der Erfindung, den bestehenden Nachteilen des Ammoniak und auch der Lagerhaltung des Ammoniak sowie des Zerfalls des Harnstoffes zu begegnen und in möglichst einer Stufe die Stickoxide aus dem Abgas zu entfernen oder so zu reduzieren, daß sie den gesetzlichen Bestimmungen über die Reinhaltung der Luft entsprechen.

Überraschend wurde festgestellt, daß durch die Einsprühung des Harnstoffes bzw. Harnstofflösung über ein Hilfsmedium die Abscheidegrade auch im Regelbereich ansteigen.

Die vorliegende Erfindung ist dadurch gekennzeichnet, daß der Harnstoff bzw. die Harnstoffderivate und gegebenenfalls ein Zusatzadditiv in den Strom eines gas- oder dampfförmigen Hilfsmediums eingesprüht wird bzw. werden und dieses Gemisch im Abgasstrom verteilt wird, wobei als Hilfsmedium für die Einblasung des Reduktionsmittels mit einem Zusatzadditiv Verbrennungsluft, Wasserdampf, Druckluft oder Inertgase und als Zusatzadditiv in einer Größenordnung bis maximal 10 Gewichtsprozent, bezogen auf die Harnstoffmenge, organische Stickstoff/-Sauerstoff-Verbindungen, wie z.B. Aminoverbindungen und mehrwertige Alkohole, eingesetzt werden, die entweder der Harnstoff- bzw. Harnstoffderivatlösung zugesetzt oder an getrennter Stelle in den Abgasstrom in gelöster bzw. suspendierter Form beigemischt werden und Sekundäremissionen abbauen und/oder die Reaktivität des Harnstoffes bzw. Harnstoffderivate in Richtung auf einen niedrigeren Temperaturbereich verlängern. Weitere wesentliche Merkmale sind in den Unteransprüchen 2 bis 7 angegeben.

Bei der Durchführung von Entstickungsversuchen zerfällt der Harnstoff, wenn er in die Brennkammer eingebracht wird und hemmt dort die Bidlung des $NO_x$ bzw. baut das gebildete $NO_x$ ab. Besonders gute Erfolge ergeben sich, wenn der Harnstoff in Wasser gelöst und vor der Eindüsung in die Brennkammer als Lösung in heiße Luft eingesprüht wird, so daß in der heißen Luft übersättigte Harnstofftröpfchen entstehen, bei denen der getrocknete Harnstoff teilweise in Biuret in besonders feiner Form kristallisiert und mit dem umhüllenden Wasserdampf in die Brennkammer bei Temperaturen von 700° C bis 1200° C eingeblasen wird. Der tatsächlich spezifisch wirksame Temperaturbereich läßt sich bis um etwa 50° C erweitern, wenn man der Lösung Additive wie N/O-Verbindungen, z.B. Triazine, Cyanamide, Guanidine, insbesondere deren Salze oder/ und mehrwertige Alkohole, wie Glycerin oder Glykoll, in Mengen bis 10 % der Harnstoffmenge, beigibt. Es ist dabei nicht unbedingt notwendig, daß die Additive mit dem Harnstoff gemeinsam eingesprüht werden, sie können auch etwas später eingebracht werden, so daß sich die Reaktivität des Harnstoffes verlängert, wobei Verlängerungen der Reaktivitätszeit bis zu 50 % erreicht wurden. Besonders vielversprechend waren in dieser Richtung Versuche mit Guanidinhydrogenkarbonat sowie Glycerin und deren Derivate. Es zeigten sich aber auch Einflüsse des verbrannten Brennstoffes, so daß katalytische Einflüsse des Flugstaubes, insbesondere mit steigendem Schwermetallgehalt, nachweisbar erscheinen. Ein weiteres wesentliches Merkmal ist, daß der Harnstoff nicht mit der Primärluft, sondern mit Oberluft bzw. Sekundär- oder Tertiärluft bei der gestuften Verbrennung zur Verringerung der $NO_x$-Bildung in der Brennkammer durch Primärmaßnahmen eingesprüht wird, d.h., daß der Harnstoff nicht sofort direkt verbrannt wird. Hierzu eignet sich auch die Rauchgasrücksaugung, insbesondere bei sauerstoffreichem Rauchgas, wenn also der Brennstoff mit Luftüberschuß verbrannt wurde. Es ist dabei, wie bereits erwähnt, wesentlich, daß die bei der Trocknung der Lösung entstehenden Wasserdämpfe den zerfallenden Harnstoff oder dessen Derivate bei der Verteilung über den Abgasquerschnitt begleiten bzw. umhüllen und bei Brennkammertemperaturen um 1000° C mit dem zum Teil entstehenden $NO_x$ und den entstehenden Zerfallsprodukten des Harnstoffes unter Mitwirkung der durch die hohen Temperaturen angeregten Wasserdampf- und halb abgebundenen Sauerstoff-Molekülen, also praktisch im status nascendi, Wechselwirkungen oder intermediäre Verbindungen entstehen, die das $NO_x$ abbauen bzw. am Entstehen hindern. Auf jeden Fall ist der $NO_x$-Gehalt am Eintritt in den Kamin oder einer vorgeschalteten zweiten Reinigungsstufe in den meisten Fällen auf die derzeit gesetzlich erträglichen Werte und darunter abgesunken. Weitere positive Effekte treten auf, wenn das feste Reduktionsmittel in flüssigen Kohlenwasserstoffen wie z.B. mehrwertigen Alkoholen, insbesondere in wässrigen Mischungen oder Emulsionen, gelöst ist, wobei Abfallchemikalien, eventuell mit geringerem Alkoholgehalt, geeignet erscheinen, wodurch die Verwendung von Zusatzadditiven eingeschränkt werden kann. Der Abbau bzw. die Verhinderung der $NO_x$-Bildung im hohen Temperaturbereich durch zerfallende organische Verbindungen hat ferner den Vorteil, daß am Kaminausgang keinerlei Durchschlag des Zusatzadditivs bzw. dessen Zerfallsprodukt feststellbar ist, auch wenn brennstoffseitig, insbesondere bei Verbrennung von Müll, mit stark wechselnder $NO_x$-Bildung zu rechnen ist. Darüber hinaus fällt kein zusätzliches Deponiegut an, selbst wenn das Reduktionsmittel überstöchiometrisch zum abschneidenden $NO_x$ dosiert wird. Besonders gute Versuchsergebnisse zeigten sich bei Dosierungen des Reduktionsmittels in der Größenordnung von 1- bzw. 2-facher Stöchiometrie zur erwarteten $NO_x$-Bildung. Bei den Versuchen wurde ferner festgestellt, daß die Heizflächen des Dampferzeugers durch die zusätzliche Einblasung des Harnstoffes nicht belastet wurden, so daß es weder zu Ablagerungen noch zu Anbackungen noch zu zusätzlichen Korrosionen gekommen ist. Zu diesem Verfahren können auch unangenehme Brennstoffe wie z. B. Braunkohle mit wechselndem Aschengehalt verwendet werden, ohne daß die Emissionsgrenzwerte überschritten würden, ja es zeigte sich, daß bei aschenreichen Brennstoffen eine Verringerung der benötigten Reduktionsmittel möglich erschien, wozu offensichtlich der Schwermetallgehalt in der Flugasche bzw. dessen katalytische Wirkungen beitrugen.

Die Erfindung ist nicht auf Harnstofflösungen beschränkt, es können auch Ammoniaklösungen (Ammoniak als Harnstoffderivat bzw. Harnstoffzerfallsprodukt) verwendet werden, wobei als Lösungsmittel nicht nur reines Wasser, sondern auch Abfallflüssigkeiten, wie z.B. vergifteter Wein (Glykol), Alkohole, Emulsionen wie z.B. Bohröl, Abwasser, Klärschlamm, insbesondere aus kommunalem Abwasser, etc., hauptsächlich Flüssigkeiten, die wenig anorganische Salze oder Schwermetallverbindungen gelöst haben, verwendet werden. In diesem Sinn kann die Erfindung auch zur Entsorgung unangenehmer Flüssigkeiten mit gleichzeitigem $NO_x$-Abbau verwendet werden.

## Patentansprüche

1) Verfahren zur Entfernung von Stickoxiden aus Abgasen mittels Harnstoff bzw. Harnstoffderivaten, vorrangig in Form wässriger Lösungen, der bzw. die in den Abgasstrom im Temperaturbereich von 700° C bis 1200° C eingedüst und über den gesamten Abgasquerschnitt verteilt wird bzw. werden, dadurch gekennzeichnet, daß der Harnstoff bzw. die Harnstoffderivate und gegebenenfalls ein Zusatzadditiv in den Strom eines gas- oder dampfförmigen Hilfsmediums eingesprüht wird bzw. werden und dieses Gemisch im Abgasstrom verteilt wird, wobei als Hilfsmedium für die Einblasung des Reduktionsmittels mit einem Zusatzadditiv Verbrennungsluft, Wasserdampf, Druckluft oder Inertgase und als Zusatzadditiv in einer Größenordnung bis maximal 10 Gewichtsprozent, bezogen auf die Harnstoffmenge, organische Stickstoff/-Sauerstoff-Verbindungen eingesetzt werden, die entweder der Harnstoff- bzw. Harnstoffderivatlösung zugesetzt oder an getrennter Stelle in den Abgasstrom in gelöster bzw. suspendierter Form beigemischt werden und Sekundäremissionen abbauen und/oder die Reaktivität des Harnstoffes bzw. Harnstoffderivate in Richtung auf einen niedrigeren Temperaturbereich verlängern.

2) Verfahren nach Anspruch 1, dadurch gekennzeichnet, daß das Reduktionsmittel in Abhängigkeit von der zu entfernenden Stickoxidfracht, insbesondere im molaren Verhältnis bis 1,5, dem Abgas zugesetzt wird.

3) Verfahren nach Anspruch 1, dadurch gekennzeichnet, daß die Harnstoff- bzw. Harnstoffderivatlösung in staubhältiges heißes Abgas eines vorrangig mit Kohlestaub befeuerten Dampfkessels in die Brennkammer in der bzw. nach der Brennerebene eingeblasen wird, wobei der im Abgas bei der Verbrennung entstehende Staub im hohen Temperaturbereich als Katalysator wirkt.

4) Verfahren nach Anspruch 1, dadurch gekennzeichnet, daß die Harnstoff- bzw. Harnstoffderivatlösung in einer oder mehreren Ebenen, vorzugsweise mit der Oberluft, Sekundär- oder Tertiärluft der Brenner, in die Brennkammer eingebracht wird.

5) Verfahren nach Anspruch 1, dadurch gekennzeichnet, daß die Harnstoff- bzw. Harnstoffderivatlösung in die Zuführungsleitung der erhitzten Oberluft eingesprüht und in dieser vorgetrocknet sowie mit dieser in einer Wasserdampfatmosphäre in der Brennkammer gleichmäßig verteilt wird.

6) Verfahren nach Anspruch 1, dadurch gekennzeichnet, daß das Reduktionsmittel in Alkohol oder in einer anderen organischen Flüssigkeit gelöst und insbesondere mit Wasser verdünnt oder aufgeschlämmt eingesetzt wird.

7) Verfahren nach Anspruch 1, dadurch gekennzeichnet, daß die Einbringung des Reduktionsmittels in gelöster Form in den Abgasstrom über Düsensysteme, insbesondere über Mehrstoffdüsen, mit geringer Tröpfchengröße erfolgt, die eine feine und insbesondere gleichmäßige Verteilung über den gesamten Abgasquerschnitt ermöglicht.

8) Verfahren nach Anspruch 1, dadurch gekennzeichnet, daß als Ammoniak zw. Ammoniakverbindung, vorrangig in wässriger Lösung, auch Abfallösungen bzw. Lösungen der Industrie und/oder Landwirtschaft mit gelöstem Ammoniak Verwendung finden.

9) Verfahren nach Anspruch 1 oder 2, dadurch gekennzeichnet, daß Zusatzadditivlösungen N- und/oder O-haltige organische Verbindungen enthalten, insbesondere Glycerin, Glykoll und/oder andere mehrwertige Alkohol- oder Abfallösungen bzw. Lösungen der Industrie und/oder Landwirtschaft sind.